# FASCICULE DE BREVET EUROPEEN

(11) **EP 3 802 120 B1**
(45) Date de publication et mention de la délivrance du brevet: **06.12.2023**
(21) Numéro de dépôt: 19740629.1
(22) Date de dépôt: 29.05.2019
(51) Int. Cl.: B32B 17/10, G02B 5/02, G02B 27/01, G03B 21/62

(54) **ELEMENT TRANSPARENT A REFLEXION DIFFUSE**
TRANSPARENTES ELEMENT MIT DIFFUSER REFLEKTION
TRANSPARENT ELEMENT WITH DIFFUSE REFLECTION

(30) Priorité: 31.05.2018 FR 1854691
(43) Date de publication de la demande: 14.04.2021
(73) Titulaire: Saint-Gobain Glass France, 92400 Courbevoie (FR)
(72) Inventeur: OZANAM, Cécile, 91120 PALAISEAU (FR); GAYOUT, Patrick, 93250 VILLEMOMBLE (FR); RUFINO, Benoît, 60350 COURTIEUX (FR)
(74) Mandataire: Saint-Gobain Recherche
(86) Numéro de dépôt international: PCT/FR2019/051263
(87) Numéro de publication internationale: WO 2019/229381

(56) Documents cités:
- WO-A1-2012/104547
- WO-A1-2013/175129
- WO-A1-2015/063418

## Description

La présente invention concerne un procédé de fabrication d'un élément en couches transparent à propriété de réflexion diffuse, cet élément en couches en tant que tel, ainsi que son utilisation dans une pluralité d'applications industrielles. L'invention concerne également un procédé de projection ou de rétroprojection mettant en oeuvre un tel élément en couches.

L'élément en couches peut être rigide ou flexible. Il peut s'agir en particulier d'un vitrage, constitué par exemple à base de verre ou de matériau polymère. Il peut s'agir également d'un film flexible à base de matériau polymère, notamment apte à être rapporté sur une surface afin de lui conférer des propriétés de réflexion diffuse tout en préservant ses propriétés de transmission.

Les vitrages connus comprennent les vitrages transparents standards, qui donnent lieu à une transmission et une réflexion spéculaires d'un rayonnement incident sur le vitrage, et les vitrages translucides, qui donnent lieu à une transmission et une réflexion diffuses d'un rayonnement incident sur le vitrage.

De manière usuelle, la réflexion par un vitrage est dite diffuse lorsqu'un rayonnement incident sur le vitrage avec un angle d'incidence donné est réfléchi par le vitrage dans une pluralité de directions. La réflexion par un vitrage est dite spéculaire lorsqu'un rayonnement incident sur le vitrage avec un angle d'incidence donné est réfléchi par le vitrage avec un angle de réflexion égal à l'angle d'incidence. De manière analogue, la transmission à travers un vitrage est dite spéculaire lorsqu'un rayonnement incident sur le vitrage avec un angle d'incidence donné est transmis par le vitrage avec un angle de transmission égal à l'angle d'incidence.

Un inconvénient des vitrages transparents standards est qu'ils renvoient des reflets nets, à la manière de miroirs, ce qui n'est pas souhaitable dans certaines applications. Ainsi, lorsqu'un vitrage est utilisé pour une fenêtre de bâtiment ou un écran d'affichage, il est préférable de limiter la présence de reflets, qui réduisent la visibilité à travers le vitrage. Des reflets nets sur un vitrage peuvent également générer des risques d'éblouissement, avec des conséquences en termes de sécurité, par exemple lorsque des phares de véhicules se reflètent sur des façades vitrées de bâtiments. Ce problème se pose tout particulièrement pour les façades vitrées d'aéroports. Il est en effet essentiel de limiter au maximum le risque d'éblouissement des pilotes à l'approche des terminaux.

Par ailleurs, les vitrages translucides, s'ils ont l'avantage de ne pas générer de reflets nets, ne permettent toutefois pas d'avoir une vision claire à travers le vitrage.

Afin de remédier à ces inconvénients, il est connu de l'état de la technique, dont le document WO2012104547A1, de mettre en oeuvre un élément en couches transparent à réflexion diffuse qui comprend deux surfaces principales externes lisses, ainsi que :
- deux couches externes, une couche externe inférieure et une couche externe supérieure, qui forment chacune une des deux surfaces principales externes de l'élément en couches et qui sont constituées en des matériaux diélectriques ayant sensiblement le même indice de réfraction, et
- une couche centrale intercalée entre les couches externes, cette couche centrale étant formée soit par une couche unique qui est une couche diélectrique d'indice de réfraction différent de celui des couches externes ou une couche métallique, soit par un empilement de couches qui comprend au moins une couche diélectrique d'indice de réfraction différent de celui des couches externes ou une couche métallique,
où chaque surface de contact entre deux couches adjacentes de l'élément en couches qui sont l'une diélectrique et l'autre métallique, ou qui sont deux couches diélectriques d'indices de réfraction différents, est texturée et parallèle aux autres surfaces de contact texturées entre deux couches adjacentes qui sont l'une diélectrique l'autre métallique ou qui sont deux couches diélectriques d'indices de réfraction différents.

Le substrat transparent peut être constitué, notamment, en polymère transparent, verre transparent, céramique transparente. Lorsque le substrat transparent est constitué en polymère, il peut être rigide ou flexible. Sous forme de film flexible, un tel substrat transparent est avantageusement muni, sur l'une de ses surfaces principales externes, d'une couche d'adhésif recouverte d'une bande de protection destinée à être retirée pour le collage du film. L'élément en couches sous forme de film flexible est alors apte à être rapporté par collage sur une surface existante, par exemple une surface d'un vitrage, afin de conférer à cette surface des propriétés de réflexion diffuse, tout en maintenant des propriétés de transmission spéculaire.

Chaque couche externe de l'élément en couches peut être formée par un empilement de couches, pour autant que les différentes couches constitutives de la couche externe soient constituées en des matériaux diélectriques ayant tous sensiblement le même indice de réfraction.

Au sens de l'invention, on entend par matériau ou couche diélectrique, un matériau ou une couche de conductivité électrique faible, inférieure à 100 S/m.

Le terme « indice » fait référence à l'indice optique de réfraction, mesuré à la longueur d'onde de 550 nm.

Au sens de l'invention, deux matériaux diélectriques ont sensiblement le même indice de réfraction, ou ont leurs indices de réfraction sensiblement égaux, lorsque la valeur absolue de la différence entre leurs indices de réfraction à 550 nm est inférieure ou égale à 0,15. De préférence, la valeur absolue de la différence d'indice de réfraction à 550 nm entre les matériaux constitutifs des deux couches externes de l'élément en couches est inférieure à 0,05, encore de préférence inférieure à 0,015.

Par opposition, deux couches diélectriques ont des indices de réfraction différents lorsque la valeur absolue de la différence entre leurs indices de réfraction à 550 nm est strictement supérieure à 0,15.

Dans l'ensemble de la description et en ce qui concerne la composition de la couche centrale, on distingue les couches métalliques, d'une part, pour lesquelles la valeur de l'indice de réfraction est indifférente, et les couches diélectriques, d'autre part, pour lesquelles la différence d'indice de réfraction par rapport à celui des couches externes est à considérer.

Au sens de l'invention, la surface de contact entre deux couches adjacentes est l'interface entre les deux couches adjacentes.

Dans le cadre de l'invention, on utilise les définitions suivantes :
- Un élément transparent est un élément à travers lequel il y a une transmission spéculaire de rayonnement au moins dans les domaines de longueurs d'onde utiles pour l'application visée de l'élément. A titre d'exemple, lorsque l'élément est utilisé en tant que vitrage de bâtiment ou de véhicule, il est transparent au moins dans le domaine de longueurs d'onde du visible.
- Une surface lisse est une surface pour laquelle les irrégularités de surface sont de dimensions inférieures à la longueur d'onde du rayonnement incident sur la surface, de sorte que le rayonnement n'est pas dévié par ces irrégularités de surface. Le rayonnement incident est alors transmis et réfléchi de manière spéculaire par la surface.
- Une surface texturée est une surface pour laquelle les irrégularités de surface varient à une échelle plus grande que la longueur d'onde du rayonnement incident sur la surface. Le rayonnement incident est alors transmis et réfléchi de manière diffuse par la surface.

Le parallélisme des surfaces de contact texturées implique que la ou chaque couche constitutive de la couche centrale qui est diélectrique d'indice de réfraction différent de celui des couches externes, ou qui est métallique, présente une épaisseur uniforme perpendiculairement aux surfaces de contact de la couche centrale avec les couches externes. Cette uniformité de l'épaisseur peut être globale sur toute l'étendue de la texture, ou locale sur des tronçons de la texture. En particulier, lorsque la texture présente des variations de pente, l'épaisseur entre deux surfaces de contact texturées consécutives peut changer, par tronçon, en fonction de la pente de la texture, les surfaces de contact texturées restant toutefois toujours parallèles entre elles. Ce cas se présente notamment pour une couche déposée par pulvérisation cathodique, où l'épaisseur de la couche est d'autant plus faible que la pente de la texture augmente. Ainsi, localement, sur chaque tronçon de texture ayant une pente donnée, l'épaisseur de la couche reste constante, mais l'épaisseur de la couche est différente entre un premier tronçon de texture ayant une première pente et un deuxième tronçon de texture ayant une deuxième pente différente de la première pente.

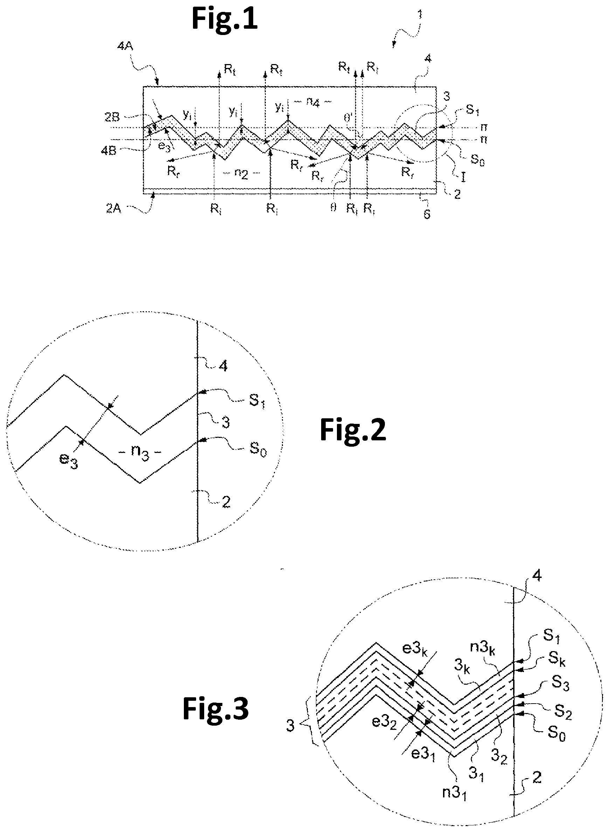

Les Figures 1 à 3 représentent un tel élément en couches transparent connu de l'état de la technique. Pour la clarté du dessin, les épaisseurs relatives des différentes couches des n'ont pas été rigoureusement respectées. De plus, la possible variation d'épaisseur de chaque couche constitutive de la couche centrale en fonction de la pente de la texture n'a pas été représentée sur les figures, étant entendu que cette possible variation d'épaisseur n'impacte pas le parallélisme des surfaces de contact texturées. En effet, pour chaque pente donnée de la texture, les surfaces de contact texturées sont parallèles entre elles.

Dans toute la description l'élément en couches transparent est considéré posé horizontalement, avec sa première face orientée vers le bas définissant une surface principale externe inférieure et sa seconde face, opposée à la première face, orientée vers le haut définissant une surface principale externe supérieure ; les sens des expressions " au-dessus " et " en-dessous " sont ainsi à considérer par rapport à cette orientation. A défaut de stipulation spécifique, les expressions " au-dessus " et " en-dessous " ne signifient pas nécessairement que les deux couches sont disposées au contact l'un de l'autre. Les termes " inférieur " et " supérieur " sont utilisés ici en référence à ce positionnement.

Notons que l'expression « compris(e) entre ... et ... » inclut les bornes dans l'intervalle.

L'élément en couches 1 représenté sur la Figure 1 comprend deux couches externes 2 et 4, qui sont constituées en des matériaux diélectriques transparents ayant sensiblement le même indice de réfraction n2, n4. Chaque couche externe 2 ou 4 présente une surface principale lisse, respectivement 2A ou 4A, dirigée vers l'extérieur de l'élément en couches, et une surface principale texturée, respectivement 2B ou 4B, dirigée vers l'intérieur de l'élément en couches.

Les surfaces externes lisses 2A et 4A de l'élément en couches 1 permettent une transmission spéculaire de rayonnement à chaque surface 2A et 4A, c'est-à-dire l'entrée d'un rayonnement dans une couche externe ou la sortie d'un rayonnement depuis une couche externe sans modification de la direction du rayonnement.

Les textures des surfaces internes 2B et 4B sont complémentaires l'une de l'autre. Comme bien visible sur la Figure 1, les surfaces texturées 2B et 4B sont positionnées en regard l'une de l'autre, dans une configuration où leurs textures sont strictement parallèles entre elles. L'élément en couches 1 comprend également une couche centrale 3, intercalée en contact entre les surfaces texturées 2B et 4B.

Dans la variante montrée sur la Figure 2, la couche centrale 3 est monocouche et constituée en un matériau transparent qui est soit métallique, soit diélectrique d'indice de réfraction n3 différent de celui des couches externes 2 et 4. Dans la variante montrée sur la figure 3, la couche centrale 3 est formée par un empilement transparent de plusieurs couches 3₁,3₂,...,3ₖ, où au moins l'une des couches 3₁ à 3ₖ est soit une couche métallique, soit une couche diélectrique d'indice de réfraction différent de celui des couches externes 2 et 4. De préférence, au moins chacune des deux couches 3₁ et 3ₖ situées aux extrémités de l'empilement est une couche métallique ou une couche diélectrique d'indice de réfraction n3₁ ou n3ₖ différents de celui des couches externes 2 et 4.

Sur les Figures 1 à 3, on note S₀ la surface de contact entre la couche externe 2 et la couche centrale 3, et S₁ la surface de contact entre la couche centrale 3 et la couche externe 4. De plus, sur la figure 3, on note successivement S₂ à Sₖ les surfaces de contact internes de la couche centrale 3, en partant de la surface de contact la plus proche de la surface S₀.

Dans la variante de la Figure 2, du fait de l'agencement de la couche centrale 3 en contact entre les surfaces texturées 2B et 4B qui sont parallèles entre elles, la surface de contact S₀ entre la couche externe 2 et la couche centrale 3 est texturée et parallèle à la surface de contact S₁ entre la couche centrale 3 et la couche externe 4. En d'autres termes, la couche centrale 3 est une couche texturée présentant, au moins localement, une épaisseur e3 uniforme, prise perpendiculairement aux surfaces de contact S₀ et S₁.

Dans la variante de la Figure 3, chaque surface de contact S₂,...,Sₖ entre deux couches adjacentes de l'empilement constitutif de la couche centrale 3 est texturée et strictement parallèle aux surfaces de contact S₀ et S₁ entre les couches externes 2, 4 et la couche centrale 3. Ainsi, toutes les surfaces de contact S₀,S₁,...,Sₖ entre des couches adjacentes de l'élément 1 qui sont soit de natures différentes, diélectrique ou métallique, soit diélectriques d'indices de réfraction différents, sont texturées et parallèles entre elles. En particulier, chaque couche 3₁,3₂,...,3ₖ de l'empilement constitutif de la couche centrale 3 présente, au moins localement, une épaisseur e3₁,e3₂,...,e3ₖ uniforme, prise perpendiculairement aux surfaces de contact S₀,S₁,...,Sₖ.

Comme montré sur la Figure 1, la texture de chaque surface de contact S₀,S₁ ou S₀,S₁,...,Sₖ de l'élément en couches 1 est formée par une pluralité de motifs en creux ou en saillie par rapport à un plan général π de la surface de contact.

La Figure 1 illustre le parcours d'un rayonnement, qui est incident sur l'élément en couches 1 du côté de la couche externe 2. Les rayons incidents Rᵢ arrivent perpendiculairement à la couche externe 2. Comme montré sur la figure 1, les rayons incidents Rᵢ, lorsqu'ils atteignent la surface de contact S₀ entre la couche externe 2 et la couche centrale 3, avec un angle d'incidence θ donné, sont réfléchis soit par la surface métallique, soit du fait de la différence d'indice de réfraction à cette surface de contact respectivement entre la couche externe 2 et la couche centrale 3 dans la variante de la figure 2 et entre la couche externe 2 et la couche 3, dans la variante de la figure 3. Comme la surface de contact S₀ est texturée, la réflexion s'opère dans une pluralité de directions Rᵣ. La réflexion du rayonnement par l'élément en couches 1 est donc diffuse.

Une partie du rayonnement incident est également réfractée dans la couche centrale 3. Dans la variante de la figure 2, les surfaces de contact S₀ et S₁ sont parallèles entre elles, ce qui implique d'après la loi de Snell-Descartes que n2.sin(θ) = n4.sin(θ'), où θ est l'angle d'incidence du rayonnement sur la couche centrale 3 à partir de la couche externe 2 et θ' est l'angle de réfraction du rayonnement dans la couche externe 4 à partir de la couche centrale 3. Dans la variante de la figure 3, comme les surfaces de contact S₀,S₁,...,Sₖ sont toutes parallèles entre elles, la relation n2.sin(θ) = n4.sin(θ') issue de la loi de Snell-Descartes reste vérifiée. Dès lors, dans les deux variantes, comme les indices de réfraction n2 et n4 des deux couches externes sont sensiblement égaux l'un à l'autre, les rayons Rₜ transmis par l'élément en couches sont transmis avec un angle de transmission θ' égal à leur angle d'incidence θ sur l'élément en couches. La transmission du rayonnement par l'élément en couches 1 est donc spéculaire.

De manière analogue, dans les deux variantes, un rayonnement incident sur l'élément couches 1 du côté de la couche externe 4 est réfléchi de manière diffuse et transmis de manière spéculaire par l'élément en couches, pour les mêmes raisons que précédemment.

De manière connue, un élément en couche tel que décrit ci-dessus peut être obtenu via un procédé de fabrication comprenant les étapes suivantes :
a) on fournit (S1), en tant que couche externe inférieure 2, un substrat transparent dont l'une des surfaces principales 2B est texturée et l'autre surface principale 2A est lisse ;
b) on dépose S2 une couche centrale 3 sur la surface principale texturée 2B de la couche externe inférieure 2 soit lorsque la couche centrale 3 est formée par une couche unique, qui est une couche diélectrique d'indice de réfraction différent de celui de la couche externe 2 ou une couche métallique, en déposant la couche centrale 3 de manière conforme sur ladite surface principale texturée 2B, soit, lorsque la couche centrale 3 est formée par un empilement de couches (3₁, 3₂, ..., 3ₖ) comprenant au moins une couche diélectrique d'indice de réfraction différent de celui de la première couche externe 2 ou une couche métallique, en déposant les couches (3₁, 3₂, ..., 3ₖ) de la couche centrale 3 successivement de manière conforme sur ladite surface principale texturée 2B ;
c) on forme (S3) la couche externe supérieure 4 sur la surface principale texturée de la couche centrale 3 opposée à la couche externe inférieure 2, où les couches externes inférieure 2 et supérieure 4 sont constituées en des matériaux diélectriques ayant sensiblement le même indice de réfraction.

Le dépôt conforme de la couche centrale 3, qu'elle soit monocouche ou formée par un empilement de plusieurs couches, doit de préférence être réalisé sous vide, par pulvérisation cathodique assistée par champ magnétique (pulvérisation dite "cathodique magnétron"). Cette technique permet en particulier de déposer, sur la surface texturée 2B du substrat 2, soit la couche unique de manière conforme, soit les différentes couches de l'empilement successivement de manière conforme à la texture. En d'autres termes, la mise en oeuvre de cette technique garantit que les surfaces délimitant les différentes couches sont parallèles entre elles.

Tel que stipulé dans l'état de la technique, dont le document WO2012104547A1, l'obtention d'un tel parallélisme des différentes couches entre elles est rendu complexe, voire impossible, dans le contexte d'un dépôt de la couche centrale 3 par voie humide, par évaporation sous vide, via un procédé de dépôt chimique en phase vapeur (CVD) et/ou via un procédé sol-gel.

Or, le parallélisme des surfaces de contact texturées à l'intérieur de l'élément en couches est essentiel pour obtenir une transmission spéculaire à travers l'élément.

Dans le contexte technique spécifique de l'invention, il existe donc dans l'état de la technique une forte incitation d'une part, à privilégier le dépôt de la couche centrale 3 par pulvérisation cathodique magnétron et d'autre part, à exclure toute autre technique de dépôt réputée pour ne pas permettre l'obtention de couches texturées parallèles entre elles.

La pulvérisation cathodique magnétron présente cependant un certain nombre d'inconvénients, parmi lesquels la complexité technique de sa mise en oeuvre.

La technique proposée permet de remédier à cet inconvénient. Plus particulièrement, l'invention se rapporte à un procédé de fabrication d'un élément en couches transparent comprenant les étapes suivantes :
a) on fournit une couche externe inférieure dont l'une des surfaces principales est texturée et l'autre surface principale est lisse ;
b) on dépose une couche centrale sur la surface principale texturée de la couche externe inférieure soit lorsque la couche centrale est formée par une couche unique, qui est une couche diélectrique d'indice de réfraction différent de celui de la couche externe ou une couche métallique, en déposant la couche centrale de manière conforme sur ladite surface principale texturée, soit, lorsque la couche centrale est formée par un empilement de couches comprenant au moins une couche diélectrique d'indice de réfraction différent de celui de la première couche externe ou une couche métallique, en déposant les couches de la couche centrale successivement de manière conforme sur ladite surface principale texturée, où chaque surface de contact entre deux couches adjacentes de l'élément en couches qui sont l'une diélectrique et l'autre métallique, ou qui sont deux couches diélectriques d'indices de réfraction différents, est texturée et parallèle aux autres surfaces de contact texturées entre deux couches adjacentes qui sont l'une diélectrique l'autre métallique ou qui sont deux couches diélectriques d'indices de réfraction différents;
c) on forme une couche externe supérieure sur la surface principale texturée de la couche centrale opposée à la couche externe inférieure, où les couches externes inférieure et supérieure sont constituées en des matériaux diélectriques ayant sensiblement le même indice de réfraction,
ledit procédé de fabrication étant caractérisé en ce que l'étape b) de dépôt de la couche centrale est réalisée par sérigraphie et comprend :
b1) Le positionnement d'un écran de sérigraphie en regard de la surface principale texturée de la couche externe inférieure,
b2) Le dépôt sur l'écran de sérigraphie, préférentiellement à l'aide d'une racle, d'une couche diélectrique d'indice de réfraction différent de celui des couches externes ou d'une couche métallique.

La présente invention repose sur un concept nouveau et inventif consistant à déposer la couche centrale d'un élément en couches transparent à réflexion diffuse par sérigraphie. Contre toute attente, la mise en oeuvre d'un tel procédé de fabrication dans ce contexte technique particulier permet de conserver des propriétés optiques proches de celles des éléments en couches pour lesquels la couche centrale a été déposée par pulvérisation magnétron, tant en réflexion qu'en transmission lumineuse. En outre, le dépôt par sérigraphie présente l'avantage d'être relativement aisée à mettre en oeuvre, d'un point de vue technique, notamment en comparaison avec le dépôt par pulvérisation cathodique à magnétron.

Tel qu'indiqué précédemment, il existe dans l'état de la technique une forte incitation à exclure la sérigraphie des techniques envisageables de dépôt de la couche centrale d'un élément en couches transparent à réflexion diffuse. En effet, suite à la mise en oeuvre d'un dépôt par sérigraphie, la solution diélectrique ou métallique déposée vient « combler » la rugosité de la surface principale texturée de la couche externe inférieure. Ainsi, cette solution comprend après dépôt et avant durcissement une surface texturée qui épouse la rugosité de la couche externe inférieure, ainsi qu'une surface opposée qui est plane. A l'état humide, une telle solution assure donc une planarisation de la surface texturée de la couche externe inférieure, effet technique *a priori* rédhibitoire pour l'obtention d'un verre transparent à réflexion diffuse pour lequel le dépôt de la couche centrale doit être conforme.

Or, de manière surprenante, il a été observé par les inventeurs d'une part, qu'au cours du durcissement, le volume de la solution déposée est significativement réduit, l'épaisseur de cette dernière pouvant par exemple passer de 14 micromètres à l'état humide à 50 nanomètres à l'état solide, et d'autre part, que le retrait de la solution n'est pas effectué selon une direction verticale mais davantage selon une direction normale à la surface texturée de la couche externe inférieure.

Ces deux facteurs combinés entre eux permettent de préserver la rugosité générale de cette surface texturée. Des mesures réalisées par les inventeurs, et détaillées dans la présente description, ont permis l'observation dégradation négligeable de la conformité de cette surface, inférieure à 30%.

Par comparaison des propriétés en réflexion de deux éléments transparents à réflexion diffuse dont les couches centrales ont respectivement été déposées par pulvérisation cathodique magnétron et par sérigraphie, les inventeurs ont de plus pu constater des performances équivalentes en projection entre le premier et le deuxième élément. Dans l'ensemble de la description, le « gain » désigne la luminance de l'élément à couche utilisé comme écran de projection, rapporté à la luminance d'un écran idéal ou en d'autres termes, d'un diffuseur parfait lambertien.

Des mesures comparatives de transparence ont également été effectuées par les inventeurs, selon un protocole expérimental détaillé dans la présente description, et ont permis d'observer qu'une différence négligeable en transparence entre deux éléments dont les couches centrales ont respectivement été déposées par pulvérisation cathodique magnétron et par sérigraphie.

Pour résumer, les mesures expérimentales conduites par les inventeurs ont mis en évidence que la rugosité de surface de la couche centrale, et les propriétés optiques en réflexion et en transmission d'un élément donc la couche centrale a été déposée par sérigraphie remplissent les critères de satisfaction établis pour les différentes applications industrielles envisagées. Ces propriétés topologiques et optiques ne présentent qu'une altération négligeable, en comparaison avec celles mesurées pour un élément dont la couche centrale a été déposée par pulvérisation cathodique magnétron.

En contrepartie, le dépôt par sérigraphie présente l'avantage d'être relativement aisé à mettre en oeuvre, d'un point de vue technique, notamment en comparaison avec le dépôt par pulvérisation cathodique à magnétron.

Selon un mode de réalisation particulier, la mise en oeuvre d'un tel procédé de fabrication permet l'obtention d'un élément en couches qui présente :
- un flou en transmission mesuré selon la norme ASTM D 1003 inférieur à 5%, de préférence inférieur à 3%, de préférence inférieur à 2,5%, de préférence inférieur à 2%,
- une clarté mesurée au Haze-Gard plus de BYK supérieure à 95% et de préférence supérieure à 98%.

Selon un mode de réalisation particulier, la couche centrale est déposée sur une portion seulement de la surface principale texturée de la couche externe inférieure.

L'utilisation de la sérigraphie permet d'effectuer un dépôt de la couche centrale, et donc d'apporter la fonctionnalité écran de projection, sur une portion seulement de la couche externe inférieure. Dans les zones périphériques, c'est-à-dire non recouvertes par cette couche centrale, le ratio de transmission lumineuse est augmenté. De manière générale, l'élément en couche présente donc une transparence améliorée.

A noter qu'un tel dépôt « partiel » de la couche central est très complexe, voire impossible à mettre en oeuvre via d'autres procédés de dépôt, dont la pulvérisation cathodique magnétron.

Selon un mode de réalisation particulier, la couche centrale est formée en déposant, sur la surface principale texturée de la couche externe inférieure, une couche qui se présente initialement dans un état visqueux adapté à des opérations de mise en forme.

La couche déposée initialement dans un état visqueux, liquide ou pâteux peut être une couche de matériau photoréticulable et/ou photopolymérisable. De préférence, ce matériau photoréticulable et/ou photopolymérisable se présente sous forme liquide à température ambiante et donne, lorsqu'il a été irradié et photoréticulé et/ou photopolymérisé, un solide transparent dépourvu de bulles ou de toute autre irrégularité. Il peut s'agir en particulier d'une résine telle que celles habituellement utilisées comme adhésifs, colles ou revêtements de surface. Ces résines sont généralement à base de monomères/ comonomères/ pré-polymères de type époxy, époxysilane, acrylate, méthacrylate, acide acrylique, acide méthacrylique. On peut citer par exemple les résines thiolène, polyuréthane, uréthane-acrylate, polyester-acrylate. Au lieu d'une résine, il peut s'agir d'un gel aqueux photoréticulable, tel qu'un gel de polyacrylamide.

Selon un mode de réalisation particulier, la couche centrale est formée en déposant, sur la surface principale texturée de la couche externe inférieure, une solution sol-gel comprenant préférentiellement un précurseur d'un oxyde de titane, préférentiellement du tétraisopropanolate de titane, puis en durcissant cette solution sol-gel.

Le procédé sol-gel consiste, dans un premier temps, à préparer une solution dite « solution sol-gel » contenant des précurseurs qui donnent lieu en présence d'eau à des réactions de polymérisation. Lorsque cette solution sol-gel est déposée sur une surface, de par la présence d'eau dans la solution sol-gel ou au contact de l'humidité ambiante, les précurseurs s'hydrolysent et se condensent pour former un réseau emprisonnant le solvant. Ces réactions de polymérisation entraînent la formation d'espèces de plus en plus condensées, qui conduisent à des particules colloïdales formant des sols puis des gels. Le séchage et la densification de ces gels, à une température de l'ordre de quelques centaines de degrés, conduit, en présence de précurseur à base de silice, à une couche sol-gel correspondant à un verre dont les caractéristiques sont semblables à celles d'un verre classique.

Du fait de leur viscosité, les solutions sol-gel, sous forme d'une solution colloïdale ou d'un gel, peuvent être déposées de manière aisée sur la surface principale texturée de la couche centrale opposée à la première couche externe, en se conformant à la texture de cette surface.

Le choix spécifique d'une couche sol-gel comme couche centrale de l'élément en couches permet:
- d'ajuster précisément l'indice optique de la couche centrale afin d'ajuster sa réflectivité,
- de rajouter une composante donnant un aspect coloré à la couche sol-gel,
- d'appliquer la couche centrale sur des surfaces complexes de tailles diverses et sans nécessiter d'équipement lourd ;
- d'obtenir des dépôts homogènes en surface, en composition et en épaisseur.

En particulier, les inventeurs ont découvert de façon surprenante que l'utilisation spécifique d'une couche sol-gel particulière comme couche centrale de l'élément en couches permet de préparer facilement des éléments en couches transparents à réflexion diffuse d'indice optique donné, avec une précision de 0,015. La couche sol-gel de l'invention présente, en fonction des proportions des différents composés précurseurs la constituant, un indice de réfraction ajustable. Il est donc possible d'ajuster avec précision l'indice de réfraction de façon à ajuster sa réflectivité.

La formulation flexible en terme d'indice de la couche sol-gel de l'invention permet d'obtenir des éléments en couches transparents présentant une qualité constante en terme de performance optique, peu importe la provenance du substrat ou la nature du substrat. De plus, il est également possible d'utiliser comme couche externe inférieure des substrats en plastique ayant un indice significativement plus élevé.

Pour ajuster avec précision l'indice de réfraction de la couche sol-gel, on modifie les proportions d'oxydes métalliques provenant de la matrice ou dispersées sous forme de particules. En règle générale, les oxydes métalliques ont un indice de réfraction plus élevé que celui de la silice. En augmentant les proportions d'oxyde métallique, on augmente l'indice de réfraction de la couche sol-gel.

Il est donc possible de déterminer théoriquement l'indice de réfraction d'une couche sol-gel en fonction des composés principaux la constituant et ainsi de déterminer théoriquement la formulation d'une solution sol-gel qui permettra d'obtenir après durcissement à une couche sol-gel présentant l'indice de réfraction requis.

Selon un mode de réalisation particulier, la température de séchage de la solution sol-gel, est comprise entre 0 et 200°C, de préférence entre 100°C et 150°C, de préférence entre 110°C et 130°C.

Selon un mode de réalisation particulier, la couche centrale telle que déposée présente une épaisseur supérieure à la valeur pic à vallée de la surface principale texturée de la couche externe inférieure.

Dans l'ensemble de la description, l'épaisseur définie entre le creux le plus bas et la saillie ou crête la plus haute correspond à la valeur appelée pic à vallée (« Pic to valley »). Selon l'invention, l'épaisseur de la couche centrale telle que déposée est définie à partir du creux le plus bas de la surface principale texturée de la couche externe inférieure.

Le dépôt d'une couche centrale dont l'épaisseur est supérieure à cette valeur pic à vallée permet de s'assurer que la totalité de la portion de surface texturée de la couche externe inférieure à recouvrir est effectivement enduite. Après durcissement, cette couche centrale devrait ainsi recouvrir la totalité de cette portion de surface texturée.

Selon un mode de réalisation particulier, la couche centrale est déposée à l'aide d'un écran de sérigraphie équipé d'un tamis dont :
- le nombre de fils par cm est compris entre 50 et 150, préférentiellement entre 75 et 125, préférentiellement entre 85 et 115, préférentiellement entre 90 et 110, préférentiellement entre 95 et 105, préférentiellement entre 99 et 101, et
- le diamètre de fil en micromètres est compris entre 24 et 72, préférentiellement entre 36 et 60, préférentiellement entre 42 et 54, préférentiellement entre 45 et 51, préférentiellement entre 47 et 49.

De manière connue, le nombre de fils et leur diamètre permettent de définir la taille de maille du tamis. Cette taille de maille a une influence directe sur l'épaisseur du motif imprimé par sérigraphie.

L'utilisation d'un tamis présentant la sélection de nombre de fils et de diamètre de fil spécifiée ci-dessus permet de déposer une couche centrale dont l'épaisseur permet à la couche centrale une fois durcie, et plus généralement à l'élément en couche, de satisfaire l'ensemble des critères techniques cités dans la présente description.

Selon un mode de réalisation particulier, la couche externe supérieure est formée en déposant, sur la surface principale texturée de la couche centrale opposée à la couche externe inférieure :
- soit une couche qui a sensiblement le même indice de réfraction que la couche externe inférieure et qui se présente initialement dans un état visqueux adapté à des opérations de mise en forme,
- soit une couche à base de matériau polymère, adaptée pour être conformée contre la surface principale texturée de la couche centrale par compression/chauffage.

Selon un mode de réalisation particulier, le procédé de fabrication comprend une étape subséquente au dépôt de la couche centrale de recuisson de cette couche centrale à une température supérieure à 550°C, préférentiellement supérieure à 600°C.

Une telle sélection de température minimum permet de limiter le temps de recuisson, et donc d'améliorer la résistance chimique de l'élément recuit, tout en limitant les risques d'évolution chromatique de ce dernier au cours de l'étape de recuisson.

L'invention concerne également un élément en couches transparent comprenant deux surfaces principales externes lisses, ainsi que :
- deux couches externes, une couche externe inférieure et une couche externe supérieure, qui forment chacune une des deux surfaces principales externes de l'élément en couches et qui sont constituées en des matériaux diélectriques ayant sensiblement le même indice de réfraction, et
- une couche centrale intercalée entre les couches externes, cette couche centrale étant formée soit par une couche unique qui est une couche diélectrique d'indice de réfraction différent de celui des couches externes ou une couche métallique, soit par un empilement de couches qui comprend au moins une couche diélectrique d'indice de réfraction différent de celui des couches externes ou une couche métallique,

où chaque surface de contact entre deux couches adjacentes de l'élément en couches qui sont l'une diélectrique et l'autre métallique, ou qui sont deux couches diélectriques d'indices de réfraction différents, est texturée et parallèle aux autres surfaces de contact texturées entre deux couches adjacentes qui sont l'une diélectrique l'autre métallique ou qui sont deux couches diélectriques d'indices de réfraction différents,
ledit élément en couches étant caractérisé en ce que ladite couche centrale est obtenue par sérigraphie.

Plusieurs indices permettent d'identifier qu'une couche, en l'espèce la couche centrale, a été déposée par sérigraphie. En premier lieu, aucune trame n'est visible, la couche ayant été disposée en « aplats ». De plus, si l'on observe le bord d'une couche sérigraphiée, il est parfois possible d'y déceler de légères hachures en zigzag. Ce défaut observé est nommé dent de scie et est imperfection provoquée par les mailles du tissu pendant l'impression.

Selon un mode de réalisation particulier, la couche centrale est déposée sur une partie seulement de la surface principale texturée de la couche externe inférieure.

Selon un mode de réalisation particulier, la couche centrale a une épaisseur en nanomètres comprise entre 50 et 100.

Une couche centrale présentant une fois durcie une telle épaisseur, et plus généralement l'élément en couche comprenant une telle couche centrale, satisfont tous deux l'ensemble des critères techniques cités dans la présente description.

Selon un mode de réalisation particulier, la couche centrale est une couche sol-gel obtenue par durcissement d'une solution un sol-gel et comprenant préférentiellement des particules d'au moins un oxyde métallique, préférentiellement de l'oxyde de titane.

Selon un mode de réalisation particulier, l'élément en couches transparent présente :
- un flou en transmission mesuré selon la norme ASTM D 1003 inférieur à 5%, de préférence inférieur à 2,5%, de préférence inférieur à 2%,
- une clarté mesurée au Haze-Gard plus de BYK supérieure à 93%, de préférence supérieur à 95% et préférence supérieure à 98%.

Selon un mode de réalisation particulier, la couleur de l'élément en couches transparent est définie, selon l'espace CIELAB 76 (CIE 1976) et avec comme source la lumière moyenne du jour (D65), par les coordonnées cartésiennes (L*, a*, b*) suivantes :
- en réflexion :
   - a* compris entre -5 et 5,
   - b* compris entre -8 et 8,
- en transmission :
   - a* compris entre -5 et 5,
   - b* compris entre -5 et 5.

Dans le présent texte, la notion de couleur regroupe les trois paramètres psychosensoriels mis en jeu dans l'établissement de son apparence visuelle, qui sont la luminosité, la teinte et la saturation, ces deux derniers paramètres pouvant être regroupés dans la notion de chromaticité. En faisant varier indépendamment les uns des autres ces trois paramètres, on peut réaliser toutes les sensations colorées imaginables. Dans ce contexte, les différents systèmes de description d'une couleur, par exemple les espaces colorimétriques de type CIE 1931 ou CIELAB 76 ou les types de coordonnées choisies dans chacun d'eux, ne sont que des façons différentes de définir les trois paramètres qui décrivent cette couleur.

A des fins purement descriptives et non limitatives, les couleurs sont définies dans l'ensemble de la description selon l'espace CIELAB 76 (CIE 1976) avec comme source la lumière moyenne du jour (D65), et en utilisant les coordonnées cartésiennes (L*, a*, b*) avec L* la clarté psychométrique (entre 0 et 100), a* la position chromatique sur un axe vert-rouge (entre -100 et 100), et b* la position chromatique sur un axe bleu-jaune (entre -100 et 100).

Selon ce mode de réalisation particulier, le vitrage conserve une neutralité colorimétrique suffisante pour une utilisation dans la plupart des applications dans le domaine du bâtiment ou de l'automobile.

Selon un mode de réalisation particulier, l'épaisseur de la couche externe inférieure est de préférence comprise entre 1 µm et 12 mm et varie selon le choix du matériau diélectrique.

Selon un mode de réalisation particulier, au moins une couche externe est un verre texturé d'un seul côté et a une épaisseur comprise entre 0,4 et 10 mm, de préférence entre 0,7 et 4 mm.

Selon un mode de réalisation particulier, au moins une couche externe est en polymère texturé d'un seul côté, par exemple un film plastique, et a une épaisseur comprise entre 0,020 et 2 mm, de préférence entre 0,025 et 0,25 mm.

Selon un mode de réalisation particulier, au moins une couche externe est constituée d'un intercalaire thermoplastique, préférentiellement du polyvinylbutyral (PVB), et a une épaisseur comprise entre 0,1 et 1,0 mm.

Selon un mode de réalisation particulier, au moins une couche externe est constituée d'une couche de matériaux diélectrique et a une épaisseur comprise entre 0,2 et 20 µm, de préférence entre 0,5 et 2 µm.

Selon un mode de réalisation particulier, au moins une couche externe comprend des matériaux durcissables initialement dans un état visqueux, liquide ou pâteux, qui sont adaptés à des opérations de mise en forme et ont une épaisseur comprise entre 0,5 et 100 µm, de préférence entre 0,5 et 40 µm, de préférence entre 0,5 et 15 µm.

Selon un mode de réalisation particulier, au moins une couche externe comprend des matériaux photoréticulables et/ou photopolymérisables qui ont une épaisseur comprise entre 0,5 et 20 µm, de préférence entre 0,7 et 10 µm.

Selon un mode de réalisation particulier, chaque couche externe de l'élément en couches est formée d'un empilement de sous-couches constituées en des matériaux ayant tous sensiblement le même indice optique. De manière alternative, l'interface entre ces sous-couches peut être soit lisse, soit texturée.

Le choix de l'épaisseur de la couche centrale dépend d'un certain nombre de paramètres. De manière générale, on considère que l'épaisseur totale de la couche centrale est comprise entre 5 et 200 nm et l'épaisseur d'une couche de la couche centrale est comprise entre 1 et 200 nm.

Selon un mode de réalisation particulier, la couche centrale est une couche métallique dont l'épaisseur est comprise entre 5 et 40 nm, préférentiellement entre 6 et 30 nm et encore préférentiellement entre 6 et 20 nm.

Selon un mode de réalisation particulier, la couche centrale est une couche diélectrique, par exemple de TiO₂, et présente une épaisseur comprise entre 20 et 100 nm, et encore préférentiellement entre 45 et 75 nm et/ou un indice de réfraction compris entre 2,2 et 2,4.

Selon un mode de réalisation particulier, les couches sont déposées par un procédé sol-gel et ont une épaisseur avant recuit/à l'état liquide comprise entre 0,5 et 50 µm, de préférence entre 5 et 25 µm, de préférence entre 10 et 15 µm.

Selon un mode de réalisation particulier, les surfaces principales externes lisses de l'élément en couches et/ou les surfaces principales externes lisses du vitrage sont planes ou bombées et de préférence, ces surfaces principales externes lisses sont parallèles entre elles. Cela contribue à limiter la dispersion lumineuse pour un rayonnement traversant l'élément en couches, et donc à améliorer la netteté de la vision à travers l'élément en couches.

L'invention concerne également l'utilisation d'un tel élément en couches comme tout ou partie d'un vitrage pour véhicule, pour bâtiment, pour mobilier urbain, pour ameublement intérieur, pour écran d'affichage, pour système Head Up Display.

Le vitrage selon l'invention est, susceptible d'être utilisé pour toutes applications connues de vitrages, telles que pour véhicules, bâtiments, mobilier urbain, ameublement intérieur, éclairage, écrans d'affichage, etc. Il peut s'agir également d'un film flexible à base de matériau polymère, notamment apte à être rapporté sur une surface afin de lui conférer des propriétés de réflexion diffuse tout en préservant ses propriétés de transmission.

L'élément en couches à forte réflexion diffuse de l'invention peut être utilisé dans un système de visualisation dit tête haute, ou "Head Up Display" (HUD).

Dans le présent texte, on entend par HUD un système permettant d'afficher des informations projetées sur un vitrage, en général le pare-brise du véhicule, qui se réfléchissent vers le conducteur ou l'observateur. De tels systèmes HUD sont notamment utiles dans les cockpits d'avion, les trains, mais aussi aujourd'hui dans les véhicules automobiles des particuliers (voitures, camions, etc.). Ces systèmes permettent d'informer le conducteur du véhicule sans que celui-ci éloigne son regard du champ de vision en avant du véhicule, ce qui permet d'accroître grandement la sécurité.

Dans le contexte de l'invention, une image réelle est formée au niveau de l'écran (et non au niveau de la route). Le conducteur doit donc « refocaliser » son regard sur le pare-brise pour lire l'information.

On note que, dans les systèmes HUD de l'état de la technique, une image virtuelle est obtenue en projetant les informations sur un vitrage (notamment un pare-brise) ayant une structure feuilletée en coin formée de deux feuilles de verre et d'un intercalaire en matière plastique. Un inconvénient de ces systèmes existants est que le conducteur observe alors une image double, une première image réfléchie par la surface du vitrage orientée vers l'intérieur de l'habitable et une seconde image par réflexion de la surface extérieure du vitrage, ces deux images étant légèrement décalées l'une par rapport à l'autre. Ce décalage peut perturber la vision de l'information.

L'invention permet de remédier à ce problème. En effet, lorsque l'élément en couches est intégré dans un système HUD, en tant que vitrage ou en tant que film flexible rapporté sur la surface principale du vitrage qui reçoit le rayonnement de la source de projection, la réflexion diffuse sur la première surface de contact texturée rencontrée par le rayonnement dans l'élément en couches peut être nettement plus élevée que la réflexion sur les surfaces externes en contact avec l'air. Ainsi, on limite la double réflexion en favorisant la réflexion sur la première surface de contact texturée de l'élément en couches.

L'invention concerne également un procédé de projection ou de rétroprojection selon lequel on dispose d'un vitrage comprenant deux surfaces principales externes utilisé comme écran de projection ou de rétroprojection et d'un projecteur, ledit procédé consistant à projeter grâce au projecteur des images visibles par des spectateurs sur l'un des côtés du vitrage, caractérisé en ce que ledit vitrage comprend un élément en couches transparent comprenant deux surfaces principales externes lisses, ainsi que :
- deux couches externes, une couche externe inférieure et une couche externe supérieure, qui forment chacune une des deux surfaces principales externes de l'élément en couches et qui sont constituées en des matériaux diélectriques ayant sensiblement le même indice de réfraction, et
- une couche centrale intercalée entre les couches externes, cette couche centrale étant formée soit par une couche unique qui est une couche diélectrique d'indice de réfraction différent de celui des couches externes ou une couche métallique, soit par un empilement de couches qui comprend au moins une couche diélectrique d'indice de réfraction différent de celui des couches externes ou une couche métallique,
où chaque surface de contact entre deux couches adjacentes de l'élément en couches qui sont l'une diélectrique et l'autre métallique, ou qui sont deux couches diélectriques d'indices de réfraction différents, est texturée et parallèle aux autres surfaces de contact texturées entre deux couches adjacentes qui sont l'une diélectrique l'autre métallique ou qui sont deux couches diélectriques d'indices de réfraction différents, ladite couche centrale étant obtenue par sérigraphie.

D'autres caractéristiques et avantages de l'invention apparaîtront à la lecture de la description suivante de modes de réalisation particuliers, donnés à titre de simples exemples illustratifs et non limitatifs, et des figures annexées, pour lesquelles :
- la figure 1 est une coupe transversale schématique d'un élément en couches connu de l'état de la technique ;
- la figure 2 est une vue à plus grande échelle du détail I de la figure 1 pour une première variante de l'élément en couches connu de l'état de la technique;
- la figure 3 est une vue à plus grande échelle du détail I de la figure 1 pour une deuxième variante de l'élément en couches connu de l'état de la technique; et
- la figure 4 est un diagramme de flux illustrant les différentes étapes d'un procédé de fabrication d'un élément en couches selon un mode de réalisation particulier de l'invention ;
- la figure 5 est une coupe transversale schématique d'un élément en couches selon un mode de réalisation particulier de l'invention ;
- la figure 6 est un graphique illustrant les variations de gain de deux échantillons en fonction de l'angle d'observation ;

Les différents éléments illustrés par les figures ne sont pas nécessairement représentés à l'échelle réelle, l'accent étant davantage porté sur la représentation du fonctionnement général de l'invention.

Sur les différentes figures, sauf indication contraire, les numéros de référence qui sont identiques représentent des éléments similaires ou identiques.

Plusieurs modes de réalisation particuliers de l'invention sont présentés par la suite. Il est entendu que la présente invention n'est nullement limitée par ces modes de réalisation particuliers et que d'autres modes de réalisation peuvent parfaitement être mis en oeuvre.

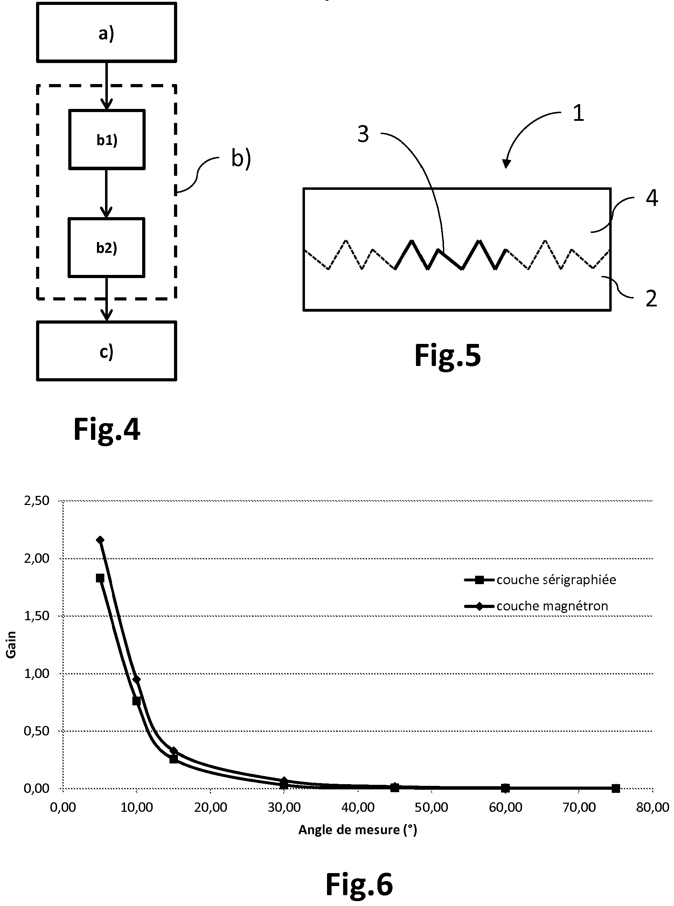

Selon un mode de réalisation particulier de l'invention, et tel qu'illustré par la figure 4, le procédé de fabrication d'un élément en couches comprend les étapes suivantes :
a) on fournit, en tant que couche externe inférieure (2), un substrat transparent dont l'une des surfaces principales (2B) est texturée et l'autre surface principale (2A) est lisse ;
b) on dépose une couche centrale (3) sur la surface principale texturée (2B) de la couche externe inférieure (2) soit lorsque la couche centrale (3) est formée par une couche unique, qui est une couche diélectrique d'indice de réfraction différent de celui de la couche externe (2) ou une couche métallique, en déposant la couche centrale (3) de manière conforme sur ladite surface principale texturée (2B), soit, lorsque la couche centrale (3) est formée par un empilement de couches (3₁, 3₂, ..., 3ₖ) comprenant au moins une couche diélectrique d'indice de réfraction différent de celui de la première couche externe (2) ou une couche métallique, en déposant les couches (3₁, 3₂, ..., 3ₖ) de la couche centrale (3) successivement de manière conforme sur ladite surface principale texturée (2B) ;
c) on forme la couche externe supérieure (4) sur la surface principale texturée de la couche centrale (3) opposée à la couche externe inférieure (2), où les couches externes inférieure (2) et supérieure (4) sont constituées en des matériaux diélectriques ayant sensiblement le même indice de réfraction.

En particulier, l'étape b) de dépôt est réalisée par sérigraphie et comprend :
b1) Le positionnement d'un écran de sérigraphie en regard de la surface principale texturée (2B) de la couche externe inférieure (2),
b2) Le dépôt sur l'écran de sérigraphie, à l'aide d'une racle, d'une couche diélectrique d'indice de réfraction (n3) différent de celui des couches externes ou d'une couche métallique.

Des exemples de polymères appropriés pour le substrat transparent comprennent, notamment, les polyesters tels que le polyéthylène téréphtalate (PET), le polybutylène téréphtalate (PBT), le polyéthylène naphtalate (PEN) ; les polyacrylates tels que le polyméthacrylate de méthyle (PMMA) ; le polycarbonate ; le polyuréthane ; les polyamides ; les polyimides ; les polymères fluorés tels que l'éthylène tétrafluoroéthylène (ETFE), le polyfluorure de vinylidène (PVDF), le polychlorotrifluoréthylène (PCTFE), l'éthylène de chlorotrifluoréthylène (ECTFE), les copolymères éthylène-propylène fluorés (FEP) ; les résines photoréticulables et/ou photopolymérisables, telles que les résines thiolène, polyuréthane, uréthane-acrylate, polyester-acrylate.

Des exemples de substrats en verre directement utilisables en tant que couche externe de l'élément en couches, comprennent :
- les substrats en verre commercialisés par la société Saint-Gobain Glass dans la gamme SATINOVO^{®}, qui sont déjà texturés et présentent sur l'une de leurs surfaces principales une texture obtenue par sablage ou attaque acide ;
- les substrats en verre commercialisés par la société Saint-Gobain Glass dans la gamme ALBARINO^{®} S, P ou G ou dans la gamme MASTERGLASS^{®}, qui présentent sur l'une de leurs surfaces principales une texture obtenue par laminage,
- les substrats en verre à haut indice texturés par sablage tel que du verre flint par exemple commercialisés par la société Schott sous les références SF6 (n=1,81), 7SF57 (n=1,85), N-SF66 (n=1,92), P-SF68 (n=2,00).

Des exemples de couches centrales pouvant être intercalées entre les couches externes comprennent les couches minces diélectriques, choisi parmi les oxydes, nitrures ou halogénures d'un ou plusieurs métaux de transition, non-métaux ou métaux alcalino-terreux, notamment des couches de Si₃N₄, SnO₂, ZnO, ZrO₂, SnZnOₓ, AIN, NbO, NbN, TiO₂, SiO₂, Al₂O₃, MgF₂, AlF₃, ou de couches minces métalliques, notamment des couches d'argent, d'or, de cuivre, de titane, de niobium, de silicium, d'aluminium, d'alliage nickel-chrome (NiCr), d'acier inoxydable, ou d'alliages de ces métaux.

La texturation de l'une des surfaces principales des couches externes peut être obtenue par tout procédé connu de texturation, par exemple par embossage de la surface du substrat préalablement chauffée à une température à laquelle il est possible de la déformer, en particulier par laminage au moyen d'un rouleau ayant à sa surface une texturation complémentaire de la texturation à former sur le substrat ; par abrasion au moyen de particules ou de surfaces abrasives, en particulier par sablage ; par traitement chimique, notamment traitement à l'acide dans le cas d'un substrat en verre ; par moulage, notamment moulage par injection dans le cas d'un substrat en polymère thermoplastique ; par gravure.

Les motifs de la texture de chaque surface de contact entre deux couches adjacentes de l'élément en couches qui sont l'une diélectrique et l'autre métallique, ou qui sont deux couches diélectriques d'indices de réfraction différents, peuvent être répartis de manière aléatoire sur la surface de contact. En variante, les motifs de la texture de chaque surface de contact entre deux couches adjacentes de l'élément en couches qui sont l'une diélectrique et l'autre métallique, ou qui sont deux couches diélectriques d'indices de réfraction différents, peuvent être répartis de manière périodique sur la surface de contact. Ces motifs peuvent être, notamment, des cônes, des pyramides, des rainures, des nervures, des vaguelettes.

Selon un mode de réalisation particulier de l'invention, et tel qu'illustré par la figure 5, la couche centrale (3) est déposée sur une portion seulement de la surface principale texturée (2B) de la couche externe inférieure (2).

La fonctionnalité écran de projection n'est donc apportée que sur cette portion de la couche externe inférieure. Dans les zones non recouvertes par cette couche centrale, le ratio de transmission lumineuse est augmenté. De manière générale, l'élément en couche présente donc une transparence améliorée.

### Exemples

### 1. Analyses de la conformité du dépôt

Afin de déterminer le niveau de conformité du dépôt réalisé par sérigraphie d'une couche centrale 3 sur la couche principale texturée 2B d'une couche externe inférieure 2, une première série d'essais a été réalisée avec un élément en couche transparent comprenant l'empilement suivant :
- couche externe inférieure 2 : substrat texturé en verre clair ou extra-clair au moins en partie texturé, par exemple un verre de type SGG Satinovo commercialisé par Saint-Gobain Glass, d'une épaisseur de 4 mm, ayant au niveau de sa surface texturée une hauteur pics/vallée (Rz) environ égale à 4,5µm, en l'espèce égale à 4,34 µm,
- couche centrale 3 : couche sol-gel obtenue par durcissement d'une solution sol-gel comprenant du tétraisopropanolate de titane, par exemple une solution de type LustReflex commercialisée par Ferro et décrite dans le document WO2005063645, ladite couche durcie ayant une épaisseur de 50 nm et étant constituée en majorité de particules de dioxyde de titane, selon une fraction volumique supérieure à 95%, préférentiellement supérieure à 97%.
- couche externe supérieure 4 : feuillet intercalaire, par exemple en PVB, qui a sensiblement le même indice de réfraction que la couche externe inférieure 2, et qui se conforme à la texture de la surface principale texturée de la couche centrale 3.

Selon un mode de réalisation particulier, le feuillet intercalaire 4 est calandré par sa surface externe à un substrat plan en verre clair ou extra-clair, par exemple un verre de type SGG Planilux commercialisé par Saint-Gobain.

Trois échantillons ont été analysés en fonction du procédé de dépôt de leur couche centrale 3.

Un premier échantillon dit « sans couche » ne comprend pas de couche centrale.

Un deuxième échantillon dit « avec couche sérigraphiée » comprend une monocouche centrale 3 formée par durcissement d'une solution sol-gel déposée par sérigraphie. Ce deuxième échantillon permet de déterminer la conformité d'un dépôt réalisé par sérigraphie d'une couche centrale 3 sur la couche principale texturée 2B d'une couche externe inférieure 2

La solution sol-gel utilisée est une solution connue comprenant du tétraisopropanolate de titane, par exemple une solution de type LustReflex commercialisée par Ferro et décrite dans le document WO2005063645, ladite solution sol-gel étant déposée à l'état humide selon une épaisseur comprise entre 12 à 14 µm. Elle recouvre alors toute la surface texturée 2B de la couche externe inférieure 2.

Après durcissement, la couche sol-gel comprend une fraction volumique de dioxyde de titane supérieure à 95%, préférentiellement supérieure à 97%, et une épaisseur de 50 nm. Cette couche dense est potentiellement légèrement plus épaisse au fond des vallées, où une plus grande quantité de produit s'est accumulée à l'état humide, bien que cela soit insuffisant pour remplir le volume des vallées à l'état solide.

Un troisième échantillon dit « avec couche magnétron » comprend une monocouche centrale 3 déposée par pulvérisation cathodique magnétron. L'analyse de ce troisième échantillon permet de comparer le degré de conformité de deux couches centrales 3 déposées respectivement par sérigraphie et pulvérisation cathodique magnétron.

Ce troisième échantillon comprend une monocouche d'oxyde de titane (TiO2) d'une épaisseur de 62 nm, et ayant une fraction volumique de dioxyde de titane également supérieure à 95%, préférentiellement supérieure à 97%.

Sur la base des profils verticaux de chacun de ces trois échantillons, les propriétés topologiques suivantes ont été mesurées selon la norme ISO 4287.

Plus précisément, l'appareil de mesure de la topographie du verre texturé est une station Micromesure 2 de la société STII SA. La station est équipée d'un capteur (CCS PRIMA) d'imagerie chromatique confocale pour une mesure sans contact.

La tête de mesure est constituée d'une lentille chromatique (ref : CL3) associée à un « magnifier » (ref : MG70) dont les caractéristiques sont les suivantes :
- Ouverture numérique 0,42
- Angle de mesure maximum : 25°
- Résolution en Z : 0,04 microns
- Résolution latérale : 4,5 microns.

La surface mesurée est de 2mm x 2mm avec un pas d'échantillonnage de 1 micron x 1 micron.

Les paramètres de rugosité sont extraits à l'aide de :
- Logiciel de traitement des données : MOUNTAINS MAP V7.2 de la société Digital Surf
- Filtrage gaussien passe bas avec une longueur de coupure de 15 microns (filtre les microrugosités)
- Filtrage gaussien passe haut avec une longueur de coupure de 1mm (filtre les ondulations).

Les résultats des mesures réalisées selon la norme ISO 4287 ont été consignés dans Tableau 1 (ci-dessous), avec :
- Rz : hauteur pic-vallée maximale moyennée sur une longueur de référence sur tous les profils,
- Ra : hauteur moyenne autour de laquelle les pics et les creux ont la même aire, également nommée « hauteur arithmétique »,
- Rsm : période moyenne et
- Rdq : pente quadratique moyenne.

**Tableau 1**

| **Valeurs moyennes sur 2000 profils** | | | | |
|---|---|---|---|---|
| | **Rz (µm)** | **Ra (µm)** | **RSm (mm)** | **Rdq (°)** |
| **Sans couche** | 4,34 | 0,747 | 0,127 | 3,37 |
| **Avec couche magnétron** | 4,06 | 0,653 | 0,112 | 3,27 |
| **Avec couche sérigraphiée** | 3,62 | 0,619 | 0,144 | 2,53 |

Au regard des résultats de ce tableau 1, on constate une légère planarisation de la surface texturée suite au dépôt de la couche centrale par sérigraphie. En effet :
- la hauteur pic/vallée (Rz) diminue,
- la période moyenne Rsm augmente, probablement du fait de la suppression des irrégularités proches les unes des autres,
- la pente quadratique moyenne diminue (Rdq), le lissage des surfaces impliquant une réduction des valeurs de pente.

En comparaison, un dépôt réalisé par magnétron engendre des variations moindres, et présente en conséquence une meilleure conformité.

La variation de la pente quadratique moyenne (Rdq), et donc de la conformité de surface, reste cependant négligeable puisque la première est égale à 24,9%, et est donc inférieure à 30%, et même à 25%.

Il a en effet été déterminé qu'une variation de la pente quadratique moyenne (Rdq) inférieure à 30%, préférentiellement inférieure à 25%, permet à l'élément à couche de conserver des propriétés satisfaisantes tant en transparence qu'en réflexion diffuse.

### 2. Analyse comparative de détermination du gain

Pour rappel, le gain désigne la luminance de l'élément à couche utilisé comme écran de projection, rapporté à la luminance d'un écran idéal ou en d'autres termes, d'un diffuseur parfait lambertien. Pour chacun des deux échantillons comprenant une couche centrale déposée respectivement par sérigraphie ou magnétron, des mesures de luminance ont donc été effectuées afin d'en déduire la valeur de gain correspondant. Ces mesures de gain ont été réalisées à l'aide d'un luminancemètre (Minolta LS100), et d'un vidéoprojecteur compact aaxa technologies P3. L'angle de projection est a été fixé à 0°, ce qui correspondant à la normale à l'écran. En effet, comme les substrats ont une texture aléatoire et non orientée, le gain ne dépend que de l'angle d'observation, ce dernier étant défini comme l'angle entre la direction d'observation et la direction de la réflexion spéculaire du vidéoprojecteur sur l'interface plane externe de l'écran. Compte-tenu de la configuration de projection et de l'angle d'inclinaison du luminancemètre, l'angle d'observation dans le plan vertical est initialement d'environ 3° et des mesures de luminance ont été réalisées tous les cinq degrés puis tous les quinze degrés de 15° à 75° (mesurés dans le plan horizontal) dans un environnement non éclairé et isolé de toute source de lumière autre que le vidéoprojecteur. Un Spectralon mesuré dans les mêmes conditions a été utilisé pour normaliser les mesures de luminance et en extraire le gain.

La figure 6 est un graphique illustrant les variations de gain mesurées pour chacun des deux échantillons comprenant une couche centrale déposée respectivement par sérigraphie ou magnétron, en fonction de l'angle d'observation. Les valeurs correspondantes sont compilées dans le tableau 2 ci-dessous.

**Tableau 2**

| Angle d'observation (deg.) | **Sérigraphie** | **Magnétron** |
|---|---|---|
| **5** | 1,83 | 2,16 |
| **10** | 0,76 | 1,25 |
| **15** | 0,26 | 0,33 |
| **30** | 0,03 | 0,07 |
| **45** | 0,01 | 0,02 |
| **60** | 0,004 | 0,011 |
| **75** | 0,003 | 0,008 |

A la lecture de ces résultats, on observe une différence de gain à 5°. Cette différence de valeur peut être due à une différence d'épaisseur, de stoechiométrie et/ou de densité entre les deux échantillons, qui a une influence directe sur la réflexion lumineuse de l'échantillon, et donc sur le gain de l'écran.

On observe de plus que la largeur à mi-hauteur de la courbe, aussi appelée angle de vue, est identique pour les deux échantillons. De ce fait, si on exclue les variations liées à la réflexion lumineuse, on en déduit que les deux échantillons ont des performances similaires en termes de réflexion diffuse. Les profils texturés des couches centrales 3 déposées respectivement par sérigraphie et magnétron sont donc similaires.

Par conséquent, un élément en couches selon l'invention, dont la couche centrale 3 est déposée par sérigraphie satisfait non seulement le critère fixé de variation de la pente quadratique moyenne (Rdq) inférieure à 30%, mais présente de plus des performances optiques proches de celles obtenues lorsque la couche centrale 3 est déposée par pulvérisation cathodique magnétron.

### 3. Mesures de la transmission lumineuse, du flou en transmission et de la clarté

Sur la base de trois échantillons correspondant respectivement au premier échantillon dit « sans couche », au deuxième échantillon dit « avec couche sérigraphiée » et au troisième échantillon dit « avec couche magnétron » décrits dans le protocole expérimental des analyses de conformité du dépôt, les propriétés optiques suivantes ont été mesurées :
- les valeurs de transmission lumineuse (TL) dans le visible en %, mesurée selon la norme NF EN 410 (illuminant D65 ; 2° Observateur),
- les valeurs de flou en transmission (Haze) en %, mesuré avec un hazemeter selon la norme ASTM D 1003 pour un rayonnement incident sur l'élément en couches du côté de la couche externe inférieure,
- la clarté (Clarity) en % avec le hazemeter Haze-Gard de BYK.

Les valeurs mesurées sont compilées dans le tableau 3 ci-dessous.

**Tableau 3**

| **Type d'échantillon** | **TL%** | **Haze %** | **Clarity %** |
|---|---|---|---|
| **Echantillon « sans couche »** | 90,1 | 1,1 | 97,8 |
| **Echantillon « avec couche sérigraphiée »** | 82,0 | 1,9 | 98,4 |
| **Echantillon « avec couche magnétron »** | 74,2 | 2,3 | 98,6 |

On observe que l'ajout de la couche centrale 3 engendre une perte en transmission lumineuse de l'élément en couches. Ceci s'explique par le fait que cette couche centrale 3 est partiellement réfléchissante. De même, l'ajout d'une couche centrale 3 introduit un léger flou. . Ceci s'explique par l'existence de réflexions totales internes au sein des vitrages transparents à réflexion diffuse. La clarté reste quant à elle globalement inchangée. Dans ce contexte, on observe que les variations en transparence, notion regroupant la clarté et le flou en transmission, sont moindres dans le cas d'une couche centrale 3 sérigraphiée, en comparaison avec une couche centrale 3 déposée par magnétron. De manière générale, on observe que la transparence de l'élément en couche est indépendante de son aptitude à réfléchir ou transmettre la lumière.

### 4. Analyse colorimétrique

Afin de déterminer l'influence de la couche centrale 3 sur la couleur de l'élément en couche 1, les caractéristiques colorimétriques de deux échantillons ont été analysées, ces deux échantillons correspondant respectivement au premier échantillon dit « sans couche » et au deuxième échantillon dit « avec couche sérigraphiée » décrits dans le protocole expérimental des analyses de conformité du dépôt.

Les caractéristiques colorimétriques mesurées sont définies par les coordonnées cartésiennes (L*, a*, b*) de l'espace CIELAB 76 (CIE 1976), avec comme source la lumière moyenne du jour (D65). Les valeurs correspondantes sont compilées dans le tableau 4 ci-dessous.

**Tableau 4**

| **Type de mesure** | **L^{∗}(D65)** | **a^{∗}(D65)** | **b^{∗}(D65)** |
|---|---|---|---|
| **Transmission sur échantillon « sans couche »** | 95,9 | -1,20 | 0,48 |
| **Transmission sur échantillon « avec couche sérigraphiée »** | 92,5 | -1,02 | 2,88 |
| **Réflexion sur échantillon « sans couche »** | 35,1 | -0,41 | -0,63 |
| **Réflexion sur échantillon « avec couche sérigraphiée »** | 47,5 | -0,95 | -6,63 |

Les valeurs mesurées sont comprises dans les plages suivantes :
- en réflexion :
   - a* compris entre -5 et 5,
   - b* compris entre -8 et 8,
- en transmission :
   - a* compris entre -5 et 5,
   - b* compris entre -5 et 5.

Selon ce mode de réalisation particulier, le vitrage conserve donc une neutralité colorimétrique suffisante pour une utilisation dans la plupart des applications dans le domaine du bâtiment ou de l'automobile.

## Revendications

1. Procédé de fabrication d'un élément en couches transparent comprenant les étapes suivantes :
a) on fournit une couche externe inférieure (2) dont l'une des surfaces principales (2B) est texturée et l'autre surface principale (2A) est lisse ;
b) on dépose une couche centrale (3) sur la surface principale texturée (2B) de la couche externe inférieure (2) soit lorsque la couche centrale (3) est formée par une couche unique, qui est une couche diélectrique d'indice de réfraction différent de celui de la couche externe (2) ou une couche métallique, en déposant la couche centrale (3) de manière conforme sur ladite surface principale texturée (2B), soit, lorsque la couche centrale (3) est formée par un empilement de couches (3₁, 3₂, ..., 3ₖ) comprenant au moins une couche diélectrique d'indice de réfraction différent de celui de la première couche externe (2) ou une couche métallique, en déposant les couches (3₁, 3₂, ..., 3ₖ) de la couche centrale (3) successivement de manière conforme sur ladite surface principale texturée (2B), où chaque surface de contact (S₀, S₁, ..., Sₖ) entre deux couches adjacentes de l'élément en couches qui sont l'une diélectrique et l'autre métallique, ou qui sont deux couches diélectriques d'indices de réfraction différents, est texturée et parallèle aux autres surfaces de contact texturées entre deux couches adjacentes qui sont l'une diélectrique l'autre métallique ou qui sont deux couches diélectriques d'indices de réfraction différents,
c) on forme une couche externe supérieure (4) sur une surface principale texturée de la couche centrale (3) opposée à la couche externe inférieure (2), où les couches externes inférieure (2) et supérieure (4) sont constituées en des matériaux diélectriques ayant sensiblement le même indice de réfraction, l'indice de réfraction étant mesuré à 550 nm, deux matériaux diélectriques ayant sensiblement le même indice de réfraction lorsque la valeur absolue de la différence entre leurs indices de réfraction est inférieure ou égale à 0,15, et ayant des indices de réfraction différents lorsque la valeur absolue de la différence entre leurs indices de réfraction est strictement supérieure à 0,15,
ledit procédé de fabrication étant **caractérisé en ce que** l'étape b) de dépôt de la couche centrale (3) est réalisée par sérigraphie et comprend :
b1) Le positionnement d'un écran de sérigraphie en regard de la surface principale texturée (2B) de la couche externe inférieure (2),
b2) Le dépôt sur l'écran de sérigraphie, préférentiellement à l'aide d'une racle, d'une couche diélectrique d'indice de réfraction (n3) différent de celui des couches externes ou d'une couche métallique.

2. Procédé de fabrication selon la revendication 1, **caractérisé en ce que** la couche centrale (3) est déposée sur une portion seulement de la surface principale texturée (2B) de la couche externe inférieure (2).

3. Procédé de fabrication selon l'une quelconque des revendications 1 et 2, **caractérisé en ce qu'**on forme la couche centrale (3) en déposant, sur la surface principale texturée (2B) de la couche externe inférieure (2), une couche qui se présente initialement dans un état visqueux adapté à des opérations de mise en forme.

4. Procédé de fabrication selon l'une quelconque des revendications 1 à 3, **caractérisé en ce qu'**on forme la couche centrale (3) en déposant, sur la surface principale texturée (2B) de la couche externe inférieure (2), une solution sol-gel comprenant préférentiellement un précurseur d'un oxyde de titane, préférentiellement du tétraisopropanolate de titane, puis en durcissant cette solution sol-gel.

5. Procédé de fabrication selon l'une des revendications 1 à 4, **caractérisé en ce que** la couche centrale (3) telle que déposée présente une épaisseur supérieure à la valeur pic à vallée de la surface principale texturée (2B) de la couche externe inférieure (2), la valeur pic à vallée étant mesurée selon la méthode décrite dans la description.

6. Procédé de fabrication selon l'une des revendications 1 à 5, **caractérisé en ce que** la couche centrale (3) est déposée à l'aide d'un écran de sérigraphie équipé d'un tamis dont :
- le nombre de fils par cm est compris entre 50 et 150, préférentiellement entre 75 et 125, préférentiellement entre 85 et 115, préférentiellement entre 90 et 110, préférentiellement entre 95 et 105, préférentiellement entre 99 et 101, et
- le diamètre de fil en micromètres est compris entre 24 et 72, préférentiellement entre 36 et 60, préférentiellement entre 42 et 54, préférentiellement entre 45 et 51, préférentiellement entre 47 et 49.

7. Procédé selon l'une quelconque des revendications 1 à 6, **caractérisé en ce qu'**on forme la couche externe supérieure (4) en déposant, sur la surface principale texturée de la couche centrale (3) opposée à la couche externe inférieure (2) :
- soit une couche (4) qui a sensiblement le même indice de réfraction que la couche externe inférieure (2) et qui se présente initialement dans un état visqueux adapté à des opérations de mise en forme,
- soit une couche à base de matériau polymère, adaptée pour être conformée contre la surface principale texturée de la couche centrale (3) par compression/chauffage.

8. Elément en couches (1) transparent comprenant deux surfaces principales externes (2A, 4A) lisses, ainsi que :
- deux couches externes, une couche externe inférieure (2) et une couche externe supérieure (4), qui forment chacune une des deux surfaces principales externes (2A, 4A) de l'élément en couches et qui sont constituées en des matériaux diélectriques ayant sensiblement le même indice de réfraction (n2, n4) tel que mesuré à 550 nm, et
- une couche centrale (3) intercalée entre les couches externes, cette couche centrale (3) étant formée soit par une couche unique qui est une couche diélectrique d'indice de réfraction (n3) différent de celui des couches externes ou une couche métallique, soit par un empilement de couches (3₁, 3₂, ..., 3ₖ) qui comprend au moins une couche diélectrique d'indice de réfraction différent de celui des couches externes ou une couche métallique,
où chaque surface de contact (S₀, S₁, ..., Sₖ) entre deux couches adjacentes de l'élément en couches qui sont l'une diélectrique et l'autre métallique, ou qui sont deux couches diélectriques d'indices de réfraction différents, est texturée et parallèle aux autres surfaces de contact texturées entre deux couches adjacentes qui sont l'une diélectrique l'autre métallique ou qui sont deux couches diélectriques d'indices de réfraction différents,
l'indice de réfraction étant mesuré à 550 nm, deux matériaux diélectriques ayant sensiblement le même indice de réfraction lorsque la valeur absolue de la différence entre leurs indices de réfraction est inférieure ou égale à 0,15, et ayant des indices de réfraction différents lorsque la valeur absolue de la différence entre leurs indices de réfraction est strictement supérieure à 0,15,
ledit élément en couches étant **caractérisé en ce que** ladite couche centrale (3) est déposée par sérigraphie.

9. Elément en couches (1) transparent selon la revendication 8, **caractérisé en ce que** la couche centrale (3) est déposée sur une partie seulement de la surface principale texturée de la couche externe inférieure.

10. Elément en couches (1) transparent selon l'une des revendications 8 et 9, **caractérisé en ce que** la couche centrale (3) a une épaisseur en nanomètres comprise entre 50 et 100.

11. Elément en couches (1) transparent selon l'une des revendications 8 à 10, **caractérisé en ce que** ladite couche centrale (3) est une couche sol-gel obtenue par durcissement d'une solution un sol-gel et comprenant préférentiellement des particules d'au moins un oxyde métallique, préférentiellement de l'oxyde de titane.

12. Elément en couches (1) transparent selon l'une des revendications 8 à 11, **caractérisé en ce qu'**il présente :
- un flou en transmission mesuré selon la norme ASTM D 1003 inférieur à 5%, de préférence inférieur à 2,5%, de préférence inférieur à 2%,
- une clarté mesurée au Haze-Gard plus de BYK supérieure à 93%, de préférence supérieur à 95% et préférence supérieure à 98%.

13. Elément en couches (1) transparent selon l'une des revendications 8 à 12, **caractérisé en ce que** sa couleur est définie, selon l'espace CIELAB 76 (CIE 1976) et avec comme source la lumière moyenne du jour (D65), par les coordonnées cartésiennes (L*, a*, b*) suivantes :
- en réflexion :
- a* compris entre -5 et 5,
- b* compris entre -8 et 8,
- en transmission :
- a* compris entre -5 et 5,
- b* compris entre -5 et 5.

14. Utilisation d'un élément en couches (1) selon l'une quelconque des revendications 8 à 13 comme tout ou partie d'un vitrage pour véhicule, pour bâtiment, pour mobilier urbain, pour ameublement intérieur, pour écran d'affichage, pour système Head Up Display.

15. Procédé de projection ou de rétroprojection selon lequel on dispose d'un vitrage comprenant deux surfaces principales externes utilisé comme écran de projection ou de rétroprojection et d'un projecteur, ledit procédé consistant à projeter grâce au projecteur des images visibles par des spectateurs sur l'un des côtés du vitrage, **caractérisé en ce que** ledit vitrage comprend un élément en couches (1) transparent selon l'une des revendications 8 à 13.

## Patentansprüche

1. Verfahren zum Herstellen eines transparenten Schichtelements, umfassend die folgenden Schritte:
a) Bereitstellen einer unteren Außenschicht (2), von der die eine der Hauptoberflächen (2B) strukturiert ist und die andere Hauptoberfläche (2A) glatt ist;
b) Abscheiden einer Mittelschicht (3) auf die strukturierte Hauptoberfläche (2B) der unteren Außenschicht (2), entweder wenn die Mittelschicht (3) durch eine einzelne Schicht ausgebildet ist, die eine dielektrische Schicht mit einem Brechungsindex, der sich von dem der Außenschicht (2) unterscheidet, oder eine Metallschicht ist, indem die Mittelschicht (3) entsprechend auf die strukturierte Hauptoberfläche (2B) abgeschieden wird, oder wenn die Mittelschicht (3) durch einen Stapel von Schichten (3₁, 3₂,..., 3ₖ) ausgebildet ist, umfassend mindestens eine dielektrische Schicht mit einem Brechungsindex, der sich von dem der ersten Außenschicht (2) unterscheidet, oder eine Metallschicht, indem die Schichten (3₁, 3₂,..., 3ₖ) der Mittelschicht (3) aufeinanderfolgend entsprechend auf die strukturierte Hauptoberfläche (2B) abgeschieden werden, wobei jede Kontaktoberfläche (S₀, S₁,..., Sₖ) zwischen zwei angrenzenden Schichten des Schichtelements, wobei die eine dielektrisch und die andere metallisch ist, oder die zwei dielektrische Schichten mit unterschiedlichen Brechungsindizes sind, strukturiert und parallel zu den anderen strukturierten Kontaktoberflächen zwischen zwei angrenzenden Schichten ist, wobei die eine dielektrisch, die andere metallisch ist, oder die zwei dielektrische Schichten mit unterschiedlichen Brechungsindizes sind,
c) Ausbilden einer oberen Außenschicht (4) auf einer strukturierten Hauptoberfläche der Mittelschicht (3) gegenüber der unteren Außenschicht (2), wobei die untere (2) und die obere (4) Außenschicht aus dielektrischen Materialien bestehen, die im Wesentlichen den gleichen Brechungsindex besitzen, wobei der Brechungsindex bei 550 nm gemessen wird, wobei zwei dielektrische Materialien im Wesentlichen den gleichen Brechungsindex besitzen, wenn der Absolutwert des Unterschieds zwischen ihren Brechungsindizes kleiner als oder gleich 0,15 ist, und unterschiedliche Brechungsindizes besitzen, wenn der Absolutwert des Unterschieds zwischen ihren Brechungsindizes strikt größer als 0,15 ist,
wobei das Herstellungsverfahren **dadurch gekennzeichnet ist, dass** der Schritt b) des Abscheidens der Mittelschicht (3) durch Siebdruck ausgeführt wird und umfasst:
b1) Positionieren einer Siebdruckschablone gegenüber der strukturierten Hauptoberfläche (2B) der unteren Außenschicht (2),
b2) Abscheiden auf die Siebdruckschablone, vorzugsweise unter Verwendung eines Schabers, einer dielektrischen Schicht mit einem Brechungsindex (n3), der sich von dem der Außenschichten oder einer metallischen Schicht unterscheidet.

2. Herstellungsverfahren nach Anspruch 1, **dadurch gekennzeichnet, dass** die Mittelschicht (3) auf nur einen Teil der strukturierten Hauptoberfläche (2B) der unteren Außenschicht (2) abgeschieden wird.

3. Herstellungsverfahren nach einem der Ansprüche 1 und 2,
**dadurch gekennzeichnet, dass** die Mittelschicht (3) ausgebildet wird, indem auf die strukturierte Hauptoberfläche (2B) der unteren Außenschicht (2) eine Schicht abgeschieden wird, die sich anfänglich in einem viskosen Zustand befindet, der für Formungsvorgänge angemessen ist.

4. Herstellungsverfahren nach einem der Ansprüche 1 bis 3,
**dadurch gekennzeichnet, dass** die Mittelschicht (3) ausgebildet wird, indem auf die strukturierte Hauptoberfläche (2B) der unteren Außenschicht (2) eine Sol-Gel-Lösung abgeschieden wird, umfassend vorzugsweise einen Vorläufer eines Titanoxids, vorzugsweise von Titantetraisopropanolat, dann indem diese Sol-Gel-Lösung gehärtet wird.

5. Herstellungsverfahren nach einem der Ansprüche 1 bis 4,
**dadurch gekennzeichnet, dass** die Mittelschicht (3), wie sie abgeschieden ist, eine Dicke aufweist, die größer als der Talspitzenwert der strukturierten Hauptoberfläche (2B) der unteren Außenschicht (2) ist, wobei der Talspitzenwert nach der in der Beschreibung beschriebenen Methode gemessen wird.

6. Herstellungsverfahren nach einem der Ansprüche 1 bis 5,
**dadurch gekennzeichnet, dass** die Mittelschicht (3) unter Verwendung einer Siebdruckschablone abgeschieden wird, die mit einem Sieb ausgerüstet ist, von dem:
- die Anzahl von Drähten pro cm zwischen 50 und 150, vorzugsweise zwischen 75 und 125, vorzugsweise zwischen 85 und 115, vorzugsweise zwischen 90 und 110, vorzugsweise zwischen 95 und 105, vorzugsweise zwischen 99 und 101 liegt, und
- der Drahtdurchmesser in Mikrometer zwischen 24 und 72, vorzugsweise zwischen 36 und 60, vorzugsweise zwischen 42 und 54, vorzugsweise zwischen 45 und 51, vorzugsweise zwischen 47 und 49 liegt.

7. Verfahren nach einem der Ansprüche 1 bis 6,
**dadurch gekennzeichnet, dass** die obere Außenschicht (4) ausgebildet wird, indem auf die strukturierte Hauptoberfläche der Mittelschicht (3) gegenüber der unteren Außenschicht (2) abgeschieden wird:
- entweder eine Schicht (4), die im Wesentlichen den gleichen Brechungsindex wie die untere Außenschicht (2) besitzt und die sich anfänglich in einem viskosen Zustand befindet, der für Formungsvorgänge angemessen ist,
- oder eine Schicht auf Polymerbasis, die angemessen ist, um an die strukturierte Hauptoberfläche der Mittelschicht (3) durch Kompression/Erwärmen angepasst zu werden.

8. Transparentes Schichtelement (1), das zwei glatte Außenoberflächen (2A, 4A) umfasst, sowie:
- zwei Außenschichten, eine untere Außenschicht (2) und eine obere Außenschicht (4), die jeweils eine der zwei äußeren Hauptoberflächen (2A, 4A) des Schichtelements ausbilden und die aus dielektrischen Materialien bestehen, die im Wesentlichen den gleichen Brechungsindex (n2, n4) besitzen, wie zum Beispiel bei 550 nm gemessen, und
- eine Mittelschicht (3), die zwischen den Außenschichten eingefügt ist, wobei diese Mittelschicht (3) entweder durch eine einzige Schicht, die eine dielektrische Schicht mit einem Brechungsindex (n3), der sich von dem der Außenschichten unterscheidet, oder eine metallische Schicht ist, oder durch einen Stapel von Schichten (3₁, 3₂, ..., 3ₖ) ausgebildet ist, der mindestens eine dielektrische Schicht mit einem Brechungsindex, der sich von dem der Außenschichten unterscheidet, oder eine metallische Schicht umfasst,
wobei jede Kontaktoberfläche (S₀, Si,..., Sₖ) zwischen zwei angrenzenden Schichten des Schichtelements, wobei die eine dielektrisch und die andere metallisch ist, oder die zwei dielektrische Schichten mit unterschiedlichen Brechungsindizes sind, strukturiert und parallel zu den anderen strukturierten Kontaktoberflächen zwischen zwei angrenzenden Schichten ist, von denen die eine dielektrisch und die andere metallisch ist, oder die zwei dielektrische Schichten mit unterschiedlichen Brechungsindizes sind,
wobei der Brechungsindex bei 550 nm gemessen wird, zwei dielektrische Materialien im Wesentlichen den gleichen Brechungsindex besitzen, wenn der Absolutwert des Unterschieds zwischen ihren Brechungsindizes höchstens 0,15 beträgt, und unterschiedliche Brechungsindizes besitzen, wenn der Absolutwert des Unterschieds zwischen ihren Brechungsindizes strikt größer als 0,15 ist,
wobei das geschichtete Element **dadurch gekennzeichnet ist, dass** die Mittelschicht (3) durch Siebdruck abgeschieden wird.

9. Transparentes geschichtetes Element (1) nach Anspruch 8,
**dadurch gekennzeichnet, dass** die Mittelschicht (3) auf nur einen Teil der strukturierten Hauptoberfläche der unteren Außenschicht abgeschieden ist.

10. Transparentes Schichtelement (1) nach einem der Ansprüche 8 und 9, **dadurch gekennzeichnet, dass** die Mittelschicht (3) eine Dicke in Nanometern zwischen 50 und 100 besitzt.

11. Transparentes Schichtelement (1) nach einem der Ansprüche 8 bis 10, **dadurch gekennzeichnet, dass** die Mittelschicht (3) eine Sol-Gel-Schicht ist, die durch Härten einer Lösung eines Sol-Gels erhalten wird und vorzugsweise umfassend Teilchen von mindestens einem Metalloxid, vorzugsweise von Titanoxid.

12. Transparentes Schichtelement (1) nach einem der Ansprüche 8 bis 11, **dadurch gekennzeichnet, dass** es aufweist:
- eine Übertragungsunschärfe, die gemäß ASTM D 1003 gemessen wird, von weniger als 5 %, vorzugsweise weniger als 2,5 %, vorzugsweise weniger als 2 %,
- eine Durchsichtigkeit, die an einem Haze-Gard Plus von BYK gemessen wird, von mehr als 93 %, vorzugsweise mehr als 95 % und vorzugsweise mehr als 98 %.

13. Transparentes Schichtelement (1) nach einem der Ansprüche 8 bis 12, **dadurch gekennzeichnet, dass** seine Farbe gemäß dem Raum CIELAB 76 (CIE 1976) und mit durchschnittlichem Tageslicht (D65) als Quelle durch die folgenden kartesischen Koordinaten (L*, a*, b*) definiert ist:
- in Reflexion:
- a* zwischen -5 und 5,
- b* zwischen -8 und 8,
- in Übertragung:
- a* zwischen -5 und 5,
- b* zwischen -5 und 5.

14. Verwendung eines Schichtelements (1) nach einem der Ansprüche 8 bis 13 als Ganzes oder einen Teil einer Verglasung für ein Fahrzeug, für ein Gebäude, für Stadtmobiliar, für Inneneinrichtung, für einen Anzeigebildschirm, für ein Head-up-Display-System.

15. Projektions- oder Rückprojektionsverfahren, wobei über eine Verglasung, umfassend zwei äußere Hauptoberflächen, die als Projektions- oder Rückprojektionsschirm verwendet wird, und einen Projektor verfügt wird, wobei das Verfahren darin besteht, mithilfe des Projektors für Zuschauer sichtbare Bilder auf einer der Seiten der Verglasung zu projizieren, **dadurch gekennzeichnet, dass** die Verglasung ein transparentes Schichtelement (1) nach einem der Ansprüche 8 bis 13 umfasst.

## Claims

1. A process for manufacturing a layered element comprising the following steps:
a) providing a lower outer layer (2) of which one of the main surfaces (2B) is textured and the other main surface (2A) is smooth;
b) depositing a central layer (3) on the textured main surface (2B) of the lower outer layer (2) either when the central layer (3) is formed by a single layer, which is a dielectric layer having a refractive index different from that of the outer layer (2) or a metal layer, by depositing the central layer (3) in a conformal manner on said textured main surface 2B, or, when the central layer (3) is formed by a stack of layers (3₁, 3₂, ..., 3ₖ) comprising at least one dielectric layer having a refractive index different from that of the first outer layer (2) or a metal layer, by depositing the layers (3₁, 3₂, ..., 3ₖ) of the central layer (3) successively in a conformal manner on said textured main surface (2B);
c) forming an upper outer layer (4) on a textured main surface of the central layer (3) on the opposite side from the lower outer layer (2), where the lower outer layer (2) and upper outer layer (4) are constituted of dielectric materials having substantially the same refractive index, the refractive index being measured at 550 nm, two dielectric materials having substantially the same refractive index when the absolute value of the difference between their refractive indexes is less than or equal to 0.15, and having different refraction indexes when the absolute value of the difference between their refractive indexes is strictly greater than 0.15,
said manufacturing process being **characterized in that** step b) of depositing the central layer (3) is carried out by screen printing and comprises:
b1) positioning a screen-printing screen opposite the textured main surface (2B) of the lower outer layer (2),
b2) depositing on the screen-printing screen, preferably using a squeegee, a dielectric layer having a refractive index (n3) different from that of the outer layers or a metal layer.

2. The manufacturing process as claimed in claim 1, **characterized in that** the central layer (3) is deposited on one portion only of the textured main surface (2B) of the lower outer layer (2).

3. The manufacturing process as claimed in either one of claims 1 and 2, **characterized in that** the central layer (3) is formed by depositing, on the textured main surface (2B) of the lower outer layer (2), a layer which is initially in a viscous state suitable for shaping operations.

4. The manufacturing process as claimed in any one of claims 1 to 3, **characterized in that** the central layer (3) is formed by depositing, on the textured main surface (2B) of the lower outer layer (2), a sol-gel solution preferentially comprising a titanium oxide precursor, preferentially titanium tetraisopropanolate, then by curing this sol-gel solution.

5. The manufacturing process as claimed in one of claims 1 to 4, **characterized in that** the central layer (3) as deposited has a thickness greater than the peak-to-valley value of the textured main surface (2B) of the lower outer layer (2), the peak-to-valley value being measured according to the method described in the description.

6. The manufacturing process as claimed in one of claims 1 to 5, **characterized in that** the central layer (3) is deposited using a screen-printing screen equipped with a mesh of which:
- the number of yarns per cm is between 50 and 150, preferentially between 75 and 125, preferentially between 85 and 115, preferentially between 90 and 110, preferentially between 95 and 105, preferentially between 99 and 101, and
- the yarn diameter in micrometers is between 24 and 72, preferentially between 36 and 60, preferentially between 42 and 54, preferentially between 45 and 51, preferentially between 47 and 49.

7. The manufacturing process as claimed in any one of claims 1 to 6, **characterized in that** the upper outer layer (4) is formed by depositing, on the textured main surface of the central layer (3) on the opposite side from the lower outer layer (2):
- either a layer (4) which has substantially the same refractive index as the lower outer layer (2) and which is initially in a viscous state suitable for shaping operations,
- or a layer based on a polymer material, suitable for being conformed against the textured main surface of the central layer (3) by compression/heating.

8. A transparent layered element (1) comprising two smooth outer main surfaces (2A, 4A), and also:
- two outer layers, a lower outer layer (2) and an upper outer layer (4), which each form one of the two outer main surfaces (2A, 4A) of the layered element and which are constituted of dielectric materials having substantially the same refractive index (n2, n4), and
- a central layer (3) inserted between the outer layers, this central layer (3) being formed either by a single layer which is a dielectric layer having a refractive index (n3) different from that of the outer layers or a metal layer, or by a stack of layers (3₁, 3₂, ..., 3ₖ) which comprises at least one dielectric layer having a refractive index different from that of the outer layers or a metal layer,
where each contact surface (S₀, S₁, ..., Sₖ) between two adjacent layers of the layered element which are one a dielectric layer and the other a metal layer, or which are two dielectric layers having different refractive indices, is textured and parallel to the other textured contact surfaces between two adjacent layers which are one a dielectric layer and the other a metal layer or which are two dielectric layers having different refractive indices,
the refractive index being measured at 550 nm, two dielectric materials having substantially the same refractive index when the absolute value of the difference between their refractive indexes is less than or equal to 0.15, and having different refraction indexes when the absolute value of the difference between their refractive indexes is strictly greater than 0.15,
said layered element being **characterized in that** said central layer (3) is deposited by screen printing.

9. The transparent layered element (1) as claimed in claim 8, **characterized in that** the central layer (3) is deposited on one portion only of the textured main surface of the lower outer layer.

10. The transparent layered element (1) as claimed in either of claims 8 and 9, **characterized in that** the central layer (3) has a thickness in nanometers of between 50 and 100.

11. The transparent layered element (1) as claimed in one of claims 8 to 10, **characterized in that** said central layer (3) is a sol-gel layer obtained by curing a sol-gel solution and preferentially comprising particles of at least one metal oxide, preferentially of titanium oxide.

12. The transparent layered element (1) as claimed in one of claims 8 to 11, **characterized in that** it has:
- a haze in transmission measured according to the standard ASTM D 1003 of less than 5%, preferably less than 2.5%, preferably less than 2%,
- a clarity measured with a BYK Haze-Gard Plus of greater than 93%, preferably greater than 95% and preferably greater than 98%.

13. The transparent layered element (1) as claimed in one of claims 8 to 12, **characterized in that** its color is defined, according to the CIELAB 76 (CIE 1976) space and with, as source, average daylight (D65), by the following Cartesian coordinates (L*, a*, b*):
- in reflection:
- a* between -5 and 5,
- b* between -8 and 8,
- in transmission:
- a* between -5 and 5,
- b* between -5 and 5.

14. The use of a layered element (1) as claimed in any one of claims 8 to 13 as all or part of a glazing for a vehicle, for a building, for street furniture, for interior furnishings, for a display screen, or for a head-up display system.

15. A projection or rear-screen projection process according to which a glazing comprising two outer main surfaces, used as a projection screen or rear-screen projection screen, and a projector are provided, said process consisting in projecting, by means of the projector, images able to be seen by spectators onto one of the sides of the glazing, **characterized in that** said glazing comprises a transparent layered element (1) as claimed in one of claims 8 to 13.
